# FASCICULE DE BREVET EUROPEEN

(11) **EP 2 268 860 B1**
(45) Date de publication et mention de la délivrance du brevet: **21.01.2015**
(21) Numéro de dépôt: 09724072.5
(22) Date de dépôt: 06.03.2009
(51) Int. Cl.: D06M 11/44, D06M 11/46, D06M 11/48, D06M 11/53, D06M 11/77, A41D 31/00, A62B 17/00, A62D 3/176, D01F 11/16, D01D 5/00, A62D 3/00, A62D 5/00, D01F 9/12

(54) **FIBRES TEXTILES AYANT DES PROPRIÉTÉS PHOTOCATALYTIQUES DE DÉGRADATION D'AGENTS CHIMIQUES OU BIOLOGIQUES, PROCÉDÉ DE PRÉPARATION ET UTILISATION À LA PHOTOCATALYSE**
TEXTILFASERN MIT PHOTOKATALYTISCHEN EIGENSCHAFTEN ZUM ABBAU VON CHEMISCHEN ODER BIOLOGISCHEN STOFFEN, HERSTELLUNGSVERFAHREN DAFÜR UND VERWENDUNG DAVON BEI DER PHOTOKATALYSE
TEXTILE FIBRES HAVING PHOTOCATALYTIC PROPERTIES FOR DEGRADING CHEMICAL OR BIOLOGICAL AGENTS, METHOD FOR PREPARING SAME AND USE THEREOF IN PHOTOCATALYSIS

(30) Priorité: 06.03.2008 FR 0801232
(43) Date de publication de la demande: 05.01.2011
(73) Titulaire: Centre National de la Recherche Scientifique, 75794 Paris Cedex 16 (FR); Université de Strasbourg, 67000 Strasbourg (FR)
(72) Inventeur: KELLER-SPITZER, Valérie, F-67203 Oberschaeffolsheim (FR); KELLER, Nicolas, F-67810 Holtzheim (FR); GRANDCOLAS, Mathieu, F-57400 Sarrebourg (FR); LOUVET, Alain, F-91220 Bretigny Sur Orge (FR)
(74) Mandataire: Desaix, Anne
(86) Numéro de dépôt international: PCT/FR2009/000238
(87) Numéro de publication internationale: WO 2009/118479

(56) Documents cités:
- US-A1- 2008 045 770
- DATABASE WPI Week 200618 Thomson Scientific, London, GB; AN 2006-167517 XP002502580 & JP 2006 035498 A (DOKURITSU GYOSEI HOJIN BUSSHITSU ZAIRYO) 9 février 2006 (2006-02-09) & JP 2006 035498 A (DOKURITSU GYOSEI HOJIN BUSSHITSU ZAIRYO) 9 février 2006 (2006-02-09)
- DATABASE WPI Week 200543 Thomson Scientific, London, GB; AN 2005-418524 XP002502694 & CN 1 586 713 A (UNIV QINGHUA) 2 mars 2005 (2005-03-02)
- JITIANU A ET AL: "Synthesis and characterization of carbon nanotubes-TiO2 nanocomposites" CARBON, ELSEVIER, OXFORD, GB, vol. 42, no. 5-6, 1 janvier 2004 (2004-01-01), pages 1147-1151, XP004503928 ISSN: 0008-6223
- SUN J ET AL: "Single-walled carbon nanotubes coated with titania nanoparticles" CARBON, ELSEVIER, OXFORD, GB, vol. 42, no. 4, 1 janvier 2004 (2004-01-01), pages 895-899, XP004495731 ISSN: 0008-6223
- LI ET AL: "Synthesis, characterization of TiO2 nanotubes-supported MS (TiO2NTs@MS, M=Cd, Zn) and their photocatalytic activity" JOURNAL OF SOLID STATE CHEMISTRY, ORLANDO, FL, US, vol. 180, no. 7, 18 juillet 2007 (2007-07-18), pages 2136-2142, XP022165015 ISSN: 0022-4596
- IDAKIEV V ET AL: "Titanium oxide nanotubes as supports of nano-sized gold catalysts for low temperature water-gas shift reaction" 18 mars 2005 (2005-03-18), APPLIED CATALYSIS A: GENERAL, ELSEVIER SCIENCE, AMSTERDAM, NL, PAGE(S) 149 - 155 , XP004758147 ISSN: 0926-860X page 149 - page 151

## Description

La présente invention concerne des fibres textiles et un matériau textile ayant des propriétés photocatalytiques de dégradation des agents chimiques ou biologiques, un procédé de préparation de ces fibres, et l'utilisation de ces fibres et de ce matériau textile pour la photocatalyse.

Le document US-A1-2008/0045770 décrit des nanocomposites comportant chacun un nanotube de carbone recouvert d'une couche externe photocatalytique.

Le document JP-A-2006 035498 décrit un film multicouche formé d'une alternance de films comportant des nanotubes de titanate remplis d'un métal noble, et de films de polycation.

Le document CN-A-1 586 713 décrit un matériau formé d'un composite charbon actif/nanotube de carbone portant du titane photocatalytique.

La protection nucléaire, radiologique, biologique et chimique (NRBC) des militaires ou des civils est usuellement assurée par des textiles ou matériaux de protection imperméables, semi-perméables ou perméables à l'air tels que des vêtements, des gants, des chaussures, des tentes, des bâches, etc., ces articles textiles étant utilisés pour la protection des individus ou des produits quelconques contre les agents de guerre NRBC toxiques ou pathogènes pour l'homme ou l'environnement.

Les textiles ou matériaux imperméables ou semi-perméables assurent une barrière contre les agents tandis que les textiles ou matériaux perméables à l'air possèdent un filtre sous la forme d'un média filtrant à base de charbon actif par exemple, qui piège les composés chimiques gazeux. Ces textiles ou matériaux de protection, à effet de stockage, de piégeage ou de barrière, ont pour objectif d'empêcher que les agents NRBC n'entrent en contact avec la peau ou l'environnement naturel.

Ce type de textile ou matériaux de protection est actuellement utilisé dans des applications militaires ou civiles, pour fabriquer des vêtements de protection individuels vis-à-vis des agents chimiques sous forme gazeuse, de vapeurs ou de liquides, tels que des composés organophosphorés (VX, sarin, tabun, soman, etc.) ou des agents vésicants (ypérite, lewisite, etc). Les matériaux de protection usuels sont constitués d'un textile et éventuellement d'un matériau complémentaire filtrant destiné à piéger les agents chimiques.

Cependant, ces textiles présentent de nombreux inconvénients de par le fait qu'ils ne permettent pas de détruire les agents chimiques et/ou biologiques. Un individu utilisant un vêtement de ce type est protégé vis-à-vis des agents toxiques tant qu'il porte ce vêtement. Lorsqu'il quitte ce vêtement, il risque toutefois d'entrer en contact avec les agents toxiques restés en surface du vêtement ou adsorbés par la couche adsorbante du vêtement, et ainsi d'être contaminé par contact ou inhalation ou après remise en suspension. De plus, lorsque le matériau adsorbant est saturé par l'agent toxique, ce matériau a tendance à relarguer une partie de cet agent, ce qui augmente le risque de contamination secondaire de l'individu ou son entourage. Il existe également un risque important de contamination des personnes qui manipulent ce vêtement par exemple pour le décontaminer ou pour soigner. La décontamination des vêtements contaminés par des agents biologiques ou chimiques est complexe et coûteuse et ne permet pas toujours de supprimer la totalité des agents toxiques, si bien que ce type de vêtement n'est en général utilisé qu'une seule fois.

On connaît par ailleurs, pour des usages civils, des textiles de protection à effet destructif ou décontaminant qui permettent de dégrader des composés organiques par réaction photocatalytique lorsqu'ils sont exposés à une illumination naturelle ou artificielle. Les fibres de ces textiles sont recouvertes d'un matériau semiconducteur ayant des propriétés photocatalytiques de dégradation de composés organiques. Le matériau photocatalytique est, selon la technique actuelle, sous forme de nanoparticules à morphologie granulaire qui permet d'exposer une surface donnée de matériau semiconducteur au rayonnement lumineux, leur surface spécifique étant modérée ou moyenne. De façon connue, lorsqu'un matériau semiconducteur reçoit un photon d'énergie supérieure ou égale à la bande interdite ou « gap » de ce matériau, une paire électron-trou est créée dans le matériau semiconducteur, respectivement un électron dans la bande de conduction et un trou dans la bande de valence. Ces porteurs de charge ont une durée de vie limitée et peuvent soit se recombiner suivant divers mécanismes, soit réagir avec les composés à éliminer présents au contact du matériau semiconducteur déposé en surface du textile. Des réactions d'oxydo-réduction ont alors lieu, qui permettent l'oxydation des composés visés, et qui conduisent à la dégradation des produits toxiques ou à des résidus de photodégradation moins toxiques ou moins nocifs (tels que des sulfates, des phosphates, du dioxyde de carbone, etc.). Il suffit alors de nettoyer le textile par lavage de façon à ôter les résidus de photodégradation du textile.

Les textiles à effet destructif ou décontaminant ont donc l'avantage, par rapport aux textiles à effet de stockage, de piégeage, ou de barrière, de permettre la destruction de composés organiques sans nécessiter de réactif additionnel et sans entraîner une consommation du matériau semiconducteur déposé sur le textile. Les textiles à effet destructif sont en outre lavables et donc réutilisables.

Cependant, la durée de vie des porteurs de charge générés par illumination des nanoparticules de matériau semiconducteur déposés sur le textile, peut être relativement courte, ce qui limite alors l'efficacité de la photocatalyse. En effet, plus la durée de vie des porteurs de charge est faible (c'est-à-dire, plus les porteurs de charges se recombinent rapidement), plus le nombre de réactions d'oxydo-réduction générées par ces porteurs de charge sera faible et moins la dégradation photocatalytique des composés organiques sera efficace. Les textiles à effet destructif permettent actuellement de dégrader par photocatalyse des composés organiques alimentaires tels que des salissures et des tâches de café, de vin ou de graisse. Par ailleurs, la durée d'exposition d'un textile de ce type à un rayonnement lumineux pour pouvoir dégrader la totalité ou la quasi-totalité des composés organiques alimentaires présents à la surface du textile, peut être relativement importante.

L'invention a notamment pour but d'apporter une solution simple, efficace et économique aux problèmes de la technique antérieure.

Elle a notamment pour objet des fibres textiles et un textile ayant des propriétés photocatalytiques de dégradation de composés organiques résistants et toxiques tels que des agents chimiques ou biologiques (agents chimiques neurotoxiques, agents vésicants, spores, bactéries, virus, champignons, etc.).

Elle propose à cet effet des fibres textiles, recouvertes au moins partiellement d'un matériau semiconducteur ayant des propriétés photocatalytiques de dégradation de composés organiques, en particulier d'agents chimiques ou biologiques, caractérisées en ce que le matériau semiconducteur est sous forme de nanostructures de morphologie unidimensionnelle dudit matériau semiconducteur, et/ou de nanoparticules dudit matériau semiconducteur qui sont fixées à des nanostructures de morphologie unidimensionnelle d'un matériau support.

Selon l'invention, les fibres textiles sont recouvertes par des nanostructures de morphologie unidimensionnelle, telles que des nanotubes et/ou des nanofibres, qui sont réalisées en matériau semiconducteur ou en matériau support, les nanostructures de morphologie unidimensionnelle en matériau support pouvant porter des nanoparticules en matériau semiconducteur ou bien des nanoparticules en matériau non-semiconducteur.

Dans la présente demande, on entend par « matériau semiconducteur », tout matériau dont la structure électronique est constituée d'une bande de valence et d'une bande de conduction dont la différence des énergies respectives est appelée bande interdite ou « gap ». Lorsqu'un matériau semiconducteur reçoit un photon d'énergie supérieure ou égale à la bande interdite de ce matériau, il se crée une paire électron-trou dans le matériau. Dans le cadre de la présente invention, ces porteurs de charge sont utilisés pour générer des réactions d'oxydo-réduction avec des composés organiques à la surface du matériau semiconducteur, en vue de la dégradation photocatalytique de ces composés.

On entend dans la présente demande par « matériau support », un matériau semiconducteur du type précité ou un matériau non-semiconducteur, ayant notamment pour fonction de porter des nanoparticules de matériau semiconducteur ou des nanoparticules de matériau non-semiconducteur. Le matériau support a une morphologie unidimensionnelle.

Dans la présente demande, les « nanostructures de morphologie unidimensionnelle » s'entendent comme des nanotubes, des nanofibres, ou autre, pouvant être en matériau semiconducteur out non et ayant une forme allongée par opposition aux nanoparticules (à morphologie granulaire), comme cela sera décrit plus en détail dans ce qui suit. L'association ou la combinaison d'une nanostructure de ce type avec des nanoparticules d'un matériau semiconducteur ou d'un matériau non-semiconducteur est désignée par le terme « nanocomposite ».

De manière générale, les fibres textiles selon l'invention peuvent être utilisées pour la dégradation photocatalytique de tout type de composés organiques. Elles sont particulièrement adaptées mais non exclusivement pour la dégradation de composés organiques non toxiques dans des applications civiles, ces composés organiques étant à base de C, H, O, etc. Il peut s'agir de salissures ou de souillures, ou de tout autre type de composés selon les applications civiles envisagées des fibres : tissu technique, tissu pour l'ameublement, tissu médical, garniture pour automobile ou transport en commun. Les fibres ou textiles selon l'invention peuvent être du type autonettoyant et avoir des propriétés biocides.

Selon l'invention, les fibres textiles peuvent être recouvertes par :
- des nanotubes et/ou des nanofibres de matériau non-semiconducteur, par exemple de carbone, ces nanotubes ou nanofibres étant recouvert(e)s et/ou remplis au moins en partie par des nanoparticules d'un matériau semiconducteur ;
- des nanotubes et/ou des nanofibres de matériau semiconducteur (par exemple de dioxyde titane ou de titanate) ;
- des nanotubes et/ou des nanofibres de matériau semiconducteur, ces nanotubes ou nanofibres étant recouvert(e)s et/ou remplis au moins en partie par des nanoparticules d'un matériau semiconducteur ; et/ou
- des nanotubes et/ou des nanofibres de matériau semiconducteur, ces nanotubes ou nanofibres étant recouvert(e)s et/ou remplis au moins en partie par des nanoparticules d'un matériau non-semiconducteur (par exemple métallique). Les nanoparticules de matériau semiconducteur peuvent être en TiO₂, WO₃, CdS, ZnO, ou SiC.

Autrement dit, les nanostructures de morphologie unidimensionnelle selon l'invention, comportent au moins des nanotubes ou des nanofibres et éventuellement des nanoparticules portées par ces nanotubes ou nanofibres, l'un au moins des deux parmi les nanotubes ou les nanofibres et les nanoparticules étant en matériau semiconducteur.

L'utilisation des nanotubes et/ou nanofibres en tant que matériau semiconducteur ou matériau formant support présente de nombreux avantages décrits ci-dessous.

Les nanotubes et les nanofibres ont une morphologie dite unidimensionnelle par opposition aux nanoparticules à morphologie granulaire, c'est-à-dire que les nanotubes et les nanofibres ont une dimension dans une direction X, la direction longitudinale, qui est très supérieure (au moins 10 fois) à leurs dimensions dans les deux autres dimensions Y, Z, alors que les dimensions X, Y, Z des nanoparticules sont sensiblement égales les unes aux autres.

En d'autres termes, les nanotubes et les nanofibres ont une longueur très supérieure à leur diamètre alors que les nanoparticules sont définies par un diamètre moyen ou une dimension moyenne. Les nanotubes et nanofibres selon l'invention sont caractérisés notamment par deux dimensions (par exemple la longueur et le diamètre), l'une au moins de ces dimensions étant d'ordre nanométrique.

A titre d'exemple, les nanotubes ou les nanofibres de matériau semiconducteur et/ou de matériau support ont un diamètre compris entre 5 et 150 nanomètres environ, et par exemple compris entre 15 et 20 nanomètres environ, et une longueur comprise entre 0,1µm et 5mm environ, et par exemple comprise entre 0,5µm et 2mm environ.

Ces nanostructures à morphologie unidimensionnelle sont par ailleurs très difficiles à dégrader, les fibres textiles selon l'invention ont donc une durée de vie relativement importante et peuvent être simplement lavées, par exemple à l'eau, pour pouvoir éliminer les résidus de photodégradation et pour pouvoir réutiliser une ou plusieurs fois ces fibres textiles.

Un autre avantage des fibres et textiles de l'invention réside dans le fait, constaté par les inventeurs, que l'efficacité de la destruction des composés organiques par irradiation est grande et indépendante des conditions de la photocatalyse : il a par exemple été constaté que les performances sont identiques ou quasi-identiques quelle que soit le degré d'humidité, par exemple entre 15 et 80% et notamment entre 20 et 50% de taux d'humidité relative.

Les nanotubes et les nanofibres d'un matériau semiconducteur ou non-semiconducteur selon l'invention ont des surfaces spécifiques au moins égales et en général supérieures à celles de nanoparticules de morphologie granulaire dans ce même matériau. Les nanotubes sont par exemple formés par l'enroulement sur eux-mêmes de feuillets d'un matériau, semiconducteur ou support, présentant des surfaces spécifiques relativement importantes. L'utilisation de ces nanotubes et nanofibres pour la dégradation photocatalytique de composés organiques permet d'optimiser la réaction de photocatalyse par l'augmentation des surfaces spécifiques du matériau exposées au rayonnement lumineux, et donc par l'augmentation des surfaces d'adsorption des composés organiques. De plus, les phénomènes de recombinaison des charges photogénérées sont limités du fait de leur délocalisation spatiale le long de la structure unidimensionnelle.

De façon connue par l'homme du métier, la dégradation photocatalytique de composés organiques au moyen d'un matériau semiconducteur déposé sur un textile a lieu comme suit.

Le textile recouvert du matériau semiconducteur est destiné à être exposé à un rayonnement lumineux naturel ou artificiel de façon à assurer la dégradation photocatalytique des composés organiques présents à la surface de ce textile et en contact avec le matériau semiconducteur.

Avantageusement, le matériau semiconducteur (tel que du TiO₂) est sous forme de nanostructures de morphologie unidimensionnelle pour être activable à la fois par une lumière ultraviolette et également par une lumière visible (c'est par exemple le cas de nanomatériaux à base de nanotubes de titanate), au contraire de certains matériaux semiconducteurs sous forme de nanoparticules de la technique antérieure qui ne sont activables que par une lumière ultraviolette. La dégradation photocatalytique est réalisée sous illumination naturelle ou artificielle, par exemple sous exposition à une lumière visible, à un rayonnement ultraviolet et/ou à la lumière solaire.

La photocatalyse est une catalyse hétérogène qui repose sur un processus électronique redox qui se produit à la surface d'un matériau semiconducteur illuminé formant un catalyseur. Le semiconducteur possède une structure électronique à bande interdite ou « gap ». Lorsqu'il est soumis à un rayonnement de photons d'énergie au moins égale à celle de la bande interdite, un électron peut passer de la bande de valence à une orbitale vacante de la bande de conduction. Il y a alors création d'un trou au niveau de la bande de valence, et libération d'un électron dans la bande de conduction. La durée de vie des paires électron-trou est très limitée. Pour que la photocatalyse soit efficace, il faut que la recombinaison soit évitée, ceci étant rendu possible par le transfert et le piégeage des charges libres photogénérées. Les charges créées migrent à la surface du catalyseur et réagissent avec des substances adsorbées susceptibles d'accepter ou de donner des électrons. Ce sont ces réactions d'oxydation ou de réduction qui sont intéressantes pour la destruction des composés nocifs et toxiques et donc pour une dépollution et/ou un décontamination du textile. Les électrons peuvent par exemple réagir avec de l'oxygène adsorbé et les trous peuvent oxyder certaines espèces adsorbées susceptibles de donner des électrons comme la vapeur d'eau ou les composés organiques. A leur tour, les espèces générées sont très réactives et peuvent oxyder des composés adsorbés sur la surface du semiconducteur, jusqu'à les minéraliser.

L'utilisation de matériau semiconducteur sous forme de nanotubes ou de nanofibres, ou sous forme de nanoparticules portées par des nanotubes ou des nanofibres d'un matériau semiconducteur ou support, présente un net avantage pour la dégradation photocatalytique de composés organiques, par rapport à l'utilisation de nanoparticules seules de matériau semiconducteur pour les raisons suivantes. Les nanostructures de morphologie unidimensionnelle, qui sont caractérisées par une longueur importante par rapport à leur diamètre, permettent d'une part d'augmenter la surface spécifique du matériau et les propriétés d'adsorption des composés organiques à dégrader en surface de ce matériau, et d'autre part d'améliorer la séparation spatiale des charges de ce matériau, due à une forte délocalisation de ces charges le long des nanostructures. Cette délocalisation accrue entraîne une durée de vie des paires électron-trou plus importante, et se traduit par une augmentation des réactions photocatalytiques de ces charges avec les substances absorbées à la surface du matériau, et finalement par une nette amélioration des performances de la photocatalyse.

La vitesse globale de dégradation des composés organiques dépend notamment de la quantité du matériau semiconducteur présent à la surface du textile comportant ces fibres textiles. Le matériau semiconducteur est présent sur la surface du textile à raison de 0,01 à 100g/m² environ, et par exemple de 0,1 à 10g/m² environ. La vitesse de dégradation dépend également de l'intensité du rayonnement lumineux.

Selon un mode de réalisation de l'invention, les fibres sont recouvertes par des nanotubes et/ou des nanofibres de dioxyde de titane ou de titanate. Le dioxyde de titane (TiO₂) est inerte, non toxique, bon marché et peu sensible aux phénomènes de corrosion photochimique. De plus, il présente des caractéristiques d'oxydoréduction avantageuses : le potentiel redox élevé de la bande de valence favorise les transferts d'électrons des substances adsorbées vers le semiconducteur (oxydation) et le potentiel de la bande de conduction légèrement négatif permet de réduire les protons ou l'oxygène.

Les nanotubes ou nanofibres de dioxyde de titane ou de titanate peuvent être recouverts ou remplis au moins en partie par des nanoparticules d'un autre matériau semiconducteur, tel que du trioxyde de tungstène (WO₃), du sulfure de cadmium (CdS), de l'oxyde de zinc (ZnO), ou du carbure de silicium (SiC), ou bien par des nanoparticules d'un matériau non-semiconducteur, tel que du platine, de l'or, du cuivre, du palladium, de l'argent, etc. Le recouvrement d'une nanostructure par des nanoparticules s'entend comme le dépôt et la fixation des nanoparticules sur la surface cylindrique externe de la nanostructure. Le remplissage d'un nanotube par des particules s'entend comme le dépôt et la fixation des nanoparticules dans la cavité longitudinale du nanotube, et sur la surface cylindrique interne du nanotube. Le couplage d'une nanostructure selon l'invention avec des nanoparticules d'un autre matériau semiconducteur permet notamment d'élargir la gamme de longueur d'onde d'activation ou d'adsorption dans laquelle les porteurs de charge sont générés. La longueur d'onde d'irradiation du textile doit être suffisamment énergétique pour provoquer le transfert d'électrons de la bande de valence à la bande de conduction et dépend donc notamment de la largeur de la bande interdite du ou des matériaux semiconducteurs. Le couplage d'une nanostructure selon l'invention avec des nanoparticules d'un matériau non-semiconducteur permet d'améliorer les propriétés photocatalytiques et biocides des nanocomposites ainsi formés.

La fixation des nanoparticules de matériau semiconducteur ou de matériau non-semiconducteur sur des nanostructures de morphologie unidimensionnelle peut être réalisée par tout type de liaisons ou interactions, et par exemple des liaisons covalentes, des liaisons ioniques, des liaisons hydrogènes, des interactions électrostatiques, etc.

Dans un autre mode de réalisation de l'invention, les fibres textiles sont recouvertes par des nanotubes et/ou des nanofibres de carbone, ces nanotubes ou nanofibres étant recouverts ou remplis au moins en partie par des nanoparticules semi-conductrices de TiO₂, WO₃, CdS, ZnO, ou SiC.

Le carbone est un matériau support non-semiconducteur qui peut être sous forme de nanotubes et/ou de nanofibres dont la morphologie unidimensionnelle favorise la délocalisation des charges, comme indiqué ci-dessus, et ainsi favorise des interactions électroniques spécifiques. D'autres matériaux supports peuvent être utilisés dans le cadre de la présente invention, tels que du charbon actif, de la zéolite, de l'alumine, de la silice, de la zircone, de l'argile, etc. Les nanotubes ou nanofibres de matériau support sont recouverts ou remplis partiellement de nanoparticules d'un matériau semiconducteur destiné à générer des porteurs de charge lorsqu'il est exposé à un rayonnement lumineux.

L'invention concerne également un textile du type tissé ou non-tissé, comportant des fibres telles que décrites ci-dessus.

La présente invention concerne encore un procédé de préparation de fibres textiles ou d'un textile tel que décrit ci-dessus. Selon l'invention, il consiste à synthétiser des nanotubes ou des nanofibres de matériau semiconducteur, des nanotubes ou des nanofibres de matériau support semiconducteur combinés à des nanoparticules de matériau semiconducteur ou non-semiconducteur, et/ou des nanotubes ou des nanofibres de matériau support non-semiconducteur combinés à des nanoparticules de matériau semiconducteur, puis, par la technique layer-by-layer, à recouvrir les fibres de ces nanotubes ou ces nanofibres. Est ici aussi décrit le procédé consistant à réaliser la synthèse *in situ* de ces nanotubes ou de ces nanofibres directement sur les fibres.

La fixation ou l'ancrage des nanostructures ou des nanocomposites sur les fibres textiles ou le textile peut varier en fonction de la méthode de dépôt. Par conséquent, il peut y avoir des liaisons de type covalente, ionique, des interactions électrostatiques ou même des liaisons hydrogènes entre les nanomatériaux photocatalytiques et le textile.

Les fibres textiles selon l'invention peuvent être naturelles ou synthétiques. Elles peuvent être par exemple des fibres de coton, de polyester, de polyamide, de fibres aramides (Kevlar®), des fibres de verre, etc, ou de tout autre matériau textile fibreux destiné à être tissé ou non tissé (par exemple Gore-Tex®) sur lequel des nanofibres et des nanotubes du type précité sont susceptibles de se fixer, de s'ancrer ou de s'associer. Des adsorbants peuvent en outre être couplés à ces fibres de façon à coupler deux types de propriétés, des propriétés photocatalytiques et des propriétés d'adsorption des molécules à dégrader. Les phases adsorbantes possédant des surfaces spécifiques importantes permettent, d'une part, d'augmenter la quantité de molécules adsorbées à dégrader et, d'autre part, de faciliter la mise en contact entre ces molécules et les sites photocatalytiques du matériau semiconducteur. Ces effets sont en outre exaltés si un contact intime existe entre les nanostructures photocatalytiques et les particules adsorbantes.Dans un premier mode de réalisation du procédé selon l'invention, les nanotubes ou les nanofibres de matériau semiconducteur, et/ou les nanofibres ou nanotubes de matériau support combinés aux nanoparticules de matériau semiconducteur ou non semiconducteur, sont synthétisés directement sur les fibres textiles ou du textile. Pour cela, les fibres peuvent être immergées dans une solution dans laquelle sont synthétisés les nanotubes ou nanofibres, comme cela sera décrit plus en détail dans ce qui suit.

Une alternative à ce premier mode de réalisation consiste à déposer une solution contenant un précurseur avec du titane (par exemple du titane métallique, de l'oxyde de titane ou des alkoxydes) sur un substrat approprié, puis de faire croître directement les nanostructures de morphologie unidimensionnelle sur ce substrat.

En variante, les nanotubes ou nanofibres précités (de matériau semiconducteur et/ou de matériau support) sont dans un premier temps synthétisés puis sont déposés sur les fibres textiles ou le textile par une ou plusieurs techniques appropriées, choisies parmi :
- la technique de pulvérisation, consistant à mettre les nanotubes ou les nanofibres en suspension dans un véhicule liquide ou gazeux approprié à une concentration donnée, à pulvériser une quantité donnée de cette suspension sur les fibres, puis à sécher le textile, par exemple par évaporation du véhicule ; les étapes de pulvérisation et de séchage pouvant être répétées une ou plusieurs fois ;
- la technique de dépôt couche par couche (de l'anglais « Layer-by-layer »), consistant à imprégner les fibres d'une solution de polycation à une concentration donnée, à rincer les fibres avec un liquide de rinçage approprié, à imprégner les fibres d'une solution de polyanion à une concentration donnée, à rincer les fibres avec un liquide de rinçage approprié, puis à sécher les fibres, la solution de polyanion contenant les nanotubes ou les nanofibres ; inversement, on peut appliquer une solution de polyanion dans un premier temps puis la solution de polycation contenant les nanotubes ou les nanofibres ; les étapes d'imprégnation et de rinçage pouvant être répétées une ou plusieurs fois de façon à recouvrir les fibres textiles ou le textile d'un film multicouches composé d'une alternance de couches chargées positivement et de couches chargées négativement ;
- la technique d'immersion ou de trempage, consistant à imprégner les fibres ou le textile d'un véhicule liquide ou gazeux approprié contenant les nanotubes ou les nanofibres en suspension à une concentration donnée, puis à sécher les fibres ou le textile.

La préparation de nanotubes ou de nanofibres d'un matériau semiconducteur, par exemple de dioxyde de titane ou de titanate, peut avoir lieu comme suit. La synthèse de ces nanostructures peut être réalisée par traitement hydrothermal à 100-150°C du matériau semiconducteur sous forme de poudre par exemple, ou sous une autre forme telle qu'un substrat contenant du titane et formant précurseur de nanostructures de matériau semiconducteur (de dioxyde de titane (TiO₂) par exemple), dans une solution basique, à base d'hydroxyde de sodium (NaOH) ou d'hydroxyde de potassium (KOH) par exemple, concentrée à 5-20M, par exemple. On peut par exemple ajouter 0,1 à 10g de matériau semiconducteur pulvérulent à 5-500mL d'une solution de NaOH (2-20M) dans un autoclave en téflon. L'ensemble est agité pendant une heure puis laissé à 100-150°C pendant plusieurs heures. Cette étape conduit à l'obtention de nanotubes de matériau semiconducteur. La poudre obtenue (ou le dépôt obtenu par croissance sur substrat) peut être ensuite filtrée sous vide et lavée par exemple avec de l'acide chlorhydrique jusqu'à l'obtention de la neutralité, rincée à l'eau distillée, puis séchée. Un traitement de calcination post-synthèse peut être effectué à 300-400°C, et par exemple à 350°C environ. Au cours de l'étape de rinçage, on obtient progressivement la formation d'une structure unidimensionnelle de matériau semiconducteur. Cette structure permet d'exposer une surface externe de contact importante, le matériau semiconducteur ainsi synthétisé présentant une surface spécifique relativement importante de l'ordre de 150 à 400m²/g environ, voire plus.

La préparation de nanocomposites comportant des nanotubes ou des nanofibres de matériau semiconducteur recouvert et/ou remplis de nanoparticules d'un autre matériau semiconducteur peut avoir lieu comme suit. Des nanotubes de matériau semiconducteur obtenus par exemple par la méthode précédemment décrite peuvent être imprégnées avec une solution appropriée, telle qu'une solution alcool/eau, une solution d'acétone, d'hydrocarbure, de chloroforme, etc., cette solution contenant un sel de matériau semiconducteur, par exemple de tungstène. Après agitation, le mélange peut être soumis à sonication, suivi d'une évaporation à température ambiante sous agitation. La poudre obtenue peut ensuite être séchée puis calcinée. On obtient alors des nanocomposites du type précité (nanotube /nanoparticules).

La préparation de nanocomposites comportant des nanotubes ou des nanofibres d'un matériau support non semiconducteur recouverts et/ou remplis de nanoparticules de matériau semiconducteur, peut avoir lieu comme suit. Des nanotubes ou nanofibres de matériau support (par exemple de carbone) sont disponibles dans le commerce, par exemple auprès de la société Pyrograf Products, Inc (Cerdaville, Ohio, USA), ou préalablement synthétisés. Ces nanostructures sont dispersées par sonication dans une solution appropriée d'un des types précités (alcool/eau, acétone, hydrocarbure, chloroforme, etc.), à laquelle est ajouté un précurseur de matériau semiconducteur, par exemple un sel. On peut utiliser l'isopropoxyde de titane, formant précurseur de la synthèse par voie sol-gel. Un acide ou une base, par exemple de l'acide chlorhydrique, peut ensuite être ajouté conduisant à un sol qui est agité et mûri sous agitation pendant plusieurs heures pour arriver au gel. Pour finir, la solution laiteuse ainsi obtenue est séchée à température ambiante pendant plusieurs heures jusqu'à calcination.

On peut privilégier le dépôt du matériau semiconducteur sur la surface externe et/ou sur la surface interne des nanostructures en fonction d'un ou de plusieurs paramètres intervenant dans la préparation des nanocomposites. On peut par exemple varier la quantité de matériau semiconducteur dans la solution d'alcool, une faible quantité favorisant la formation des nanocomposites où les nanoparticules sont situées sur la surface externe des nanotubes, et une quantité plus importante favorisant plutôt la formation de nanocomposites où les nanoparticules sont situées dans les cavités internes des nanotubes. On peut également utiliser des solvants présentant des mouillabilités différentes à l'intérieur et à l'extérieur des nanotubes.

La préparation de fibres textiles ou d'un textile par la technique de pulvérisation (ou « spraying ») peut avoir lieu de la façon suivante. Les nanofibres, nanotubes, ou nanocomposites peuvent être mis en suspension dans une solution eau/alcool à une concentration donnée. La solution peut ensuite être pulvérisée une première fois sur les fibres de façon à bien imprégner ces fibres. Les fibres peuvent alors être mises à l'étuve et séchées. De la solution peut à nouveau être pulvérisée une seconde et une troisième fois sur les fibres, chaque étape de pulvérisation pouvant être suivie d'une étape de séchage des fibres.

La technique de pulvérisation peut être utilisée pour déposer tout type de nanotubes ou nanofibres de matériau semiconducteur, ou tout type de nanotubes ou nanofibres de matériau support portant des nanoparticules d'un matériau semiconducteur, et ce sur tout type de textile ou de fibres textiles.

La préparation des fibres textiles ou d'un textile selon l'invention par la technique de dépôt couche par couche (ou « Layer-by-layer ») peut avoir lieu de la manière suivante. La technique « Layer-by-layer » permet de construire des films multicouches de polyélectrolyte par adsorptions successives de composés chargés négativement et positivement à la surface des fibres ou du textile. Pour cela, on peut préparer un polycation d'une part, et un polyanion d'autre part, le polyanion ou le polycation contenant des nanostructures ou des nanocomposites selon l'invention. Le pH du polyanion et du polycation peut être ajusté. Les fibres textiles peuvent être préalablement rincées, dégraissées, puis séchées. Les fibres sont introduites dans une solution de polycation, rincées abondamment à l'eau distillée, mises dans la solution de polyanion, puis rincé abondamment. Ces étapes peuvent être réalisées autant de fois que nécessaire. Les fibres sont enfin séchées. Les fibres obtenues sont alors recouvertes d'un tapis ou d'un film homogène, formé de couches successives de nanostructures ou nanocomposites. L'obtention de ces couches successives offre une meilleure résistance à l'érosion due au frottement. Cette technique de dépôt permet également d'apporter une flexibilité et une modulation et permet notamment de dissocier les fonctions et natures des différentes couches.

La technique Layer-by-layer peut être utilisée pour déposer tout type de nanotubes ou nanofibres de matériau semiconducteur, ou tout type de nanotubes ou nanofibres de matériau support portant des nanoparticules d'un matériau semiconducteur, et ce sur tout type de textile ou de fibres textiles. Cette technique permet en outre de couvrir de plus grandes surfaces de fibres textiles ou de textiles que les autres techniques.

La technique Layer-by-layer est particulièrement adaptée pour préparer des fibres textiles selon l'invention car elle permet d'obtenir un bon accrochage des nanostructures de morphologie unidimensionnelle sur les fibres par rapport à d'autres techniques de préparation. La tenue des nanostructures sur les fibres est telle que ces fibres peuvent être lavées pour enlever les résidus issus de la dégradation photocatalytique de composés organiques, sans risque de détachement des nanostructures des fibres. Par ailleurs, on a constaté que le rendement de la dégradation photocatalytique de composés organiques est supérieur avec des nanostructures de morphologie unidimensionnelle déposées sur des fibres par la technique Layer-by-layer qu'avec des nanostructures identiques déposées par une autre technique sur des fibres identiques.

La préparation de fibres textiles ou d'un textile par la technique de trempage ou d'immersion (ou « coating ») peut avoir lieu comme suit. Le dépôt de nanostructures ou nanocomposites par « coating » peut être obtenu par trempage des fibres dans une solution eau/alcool contenant les nanostructures ou nanocomposites sous forme pulvérulente en suspension, à une concentration donnée. Les fibres peuvent ensuite être séchées sous flux d'air, séchées à température ambiante, puis séchées à plus forte température.

La technique de trempage ou d'immersion peut être utilisée pour déposer tout type de nanotubes ou de nanofibres de matériau semiconducteur, ou tout type de nanotubes ou de nanofibres de matériau support, portant ou non des nanoparticules d'un matériau semiconducteur, et ce sur tout type de textile ou de fibres textiles.

Les fibres textiles selon l'invention peuvent également être préparées par la technique de dépôt par CVD (de l'anglais Chemical Vapor Deposition) qui consiste à vaporiser un précurseur liquide contenant du titane directement sur un substrat ou un support comportant des fibres textiles.

La préparation des fibres textiles ou du textile par la technique de « padding » peut avoir lieu comme suit. Les nanostructures ou nanocomposites peuvent être appliqués sur le textile par foulardage, pulvérisation, enduction, impression ou épuisement de bain par exemple, comme cela est bien connu dans le domaine de la fabrication de textiles. Le foulardage est une technique permettant d'ajouter un matériau sur le textile par compression (à chaud ou à froid). Le matériau (dans notre cas les nanostructures ou nanocomposites à morphologie unidimensionrielle) est déposé sur le textile par trempage du textile dans une cuve contenant la solution d'imprégnation, puis le textile est compressé entre deux plaques, entre deux rouleaux, ou sous un rouleau de caoutchouc pour éliminer (ou exprimer) le surplus. L'opération de foulardage comprend les deux phases (imprégnation et exprimage).

La fixation des nanotubes, nanofibres ou nanocomposites sur des fibres textiles peut être obtenue par l'intermédiaire de liants ou espaceurs. Ces liants peuvent être de nature organique ou inorganique. Les liants organiques sont des molécules organiques, du type acide carboxylique ou alcool, possédant au moins deux fonctions organiques capables, après réaction chimique, de former des liaisons d'une part avec le textile et d'autre part avec les groupements de surface du matériau semiconducteur

(tel que TiO₂). On arrive ainsi à une couche intermédiaire entre les fibres du textile et les nanostructures photocatalytiques.

Il est également possible d'utiliser un liant inorganique tel que de la silice, ce qui permet d'augmenter les sites d'accrochage pour le dépôt des nanostructures ou nanocomposites à base de TiO₂. En effet, les molécules de TiO₂ possèdent la propriété de former facilement des liaisons fortes et durables avec la silice, due à des interactions spécifiques.

La synthèse *in situ* de nanotubes, de nanofibres et/ou de nanocomposites décrite ici sur les fibres d'un textile peut avoir lieu comme suit. Il est possible de synthétiser directement les nanofibres, nanotubes ou nanocomposites sur un textile, soit en effectuant l'ensemble des étapes de la synthèse directement au contact du textile, soit en effectuant au contact du textile une ou quelques unes des étapes du procédé de synthèse.

L'invention concerne en outre l'utilisation des fibres textiles ou du textile du type précité pour la dégradation photocatalytique de composés organiques toxiques, en particulier d'agents biologiques ou chimiques sous forme gazeuse ou liquide.

On entend selon l'invention par agents chimiques ou biologiques, toute substance pouvant être létale ou neutralisante pour l'homme (voire pour certains animaux et/ou certaines plantes). Les agents chimiques peuvent être classés en trois catégories : les irritants, les incapacitants psychiques ou physiques, et les agents létaux tels que les agents vésicants, les agents suffocants, les agents asphyxiants, et les agents neurotoxiques. On connaît notamment des toxiques à base d'organophosphates ou de sulfures d'alkyle. Les agents biologiques peuvent être des armes bactériologiques ou des armes virologiques et comprennent en général des germes pathologiques destinés à affaiblir ou à propager des maladies mortelles ou incapacitantes. Les agents biologiques peuvent être des bactéries, des virus, des champignons et des spores. Selon la présente demande, ces agents chimiques ou biologiques sont destinés à être détruits, décomposés ou inactivés par dégradation photocatalytique au contact d'un matériau semiconducteur exposé à un rayonnement lumineux de longueur d'onde donnée, cette décomposition engendrant des espèces moins ou non toxiques qui sont facilement éliminables par lavage ou autre.

Dans la présente demande, on entend par « agent simulant » un agent chimique ou biologique factice qui simule au moins certaines des propriétés et des caractéristiques d'un agent chimique ou biologique réel, sans que ni le simulant ni ses produits de dégradation airent la toxicité de cet agent réel.

La dégradation photocatalytique peut être réalisée entre -10 et 150°C environ, et par exemple à température ambiante. Cette dégradation est réalisée sous illumination naturelle ou artificielle, par exemple sous exposition à une lumière visible et/ou à un rayonnement ultraviolet. Par rayonnement ultraviolet, on entend une illumination de longueur d'onde inférieure à 400nm, et par exemple comprise entre 350 et 390nm dans le cas particulier d'un rayonnement UV-A. Par lumière visible, on entend une illumination de longueur d'onde comprise entre 400 et 800nm, et dans le cas du solaire, on entend une illumination comprenant une faible part d'UV-A et une large part de visible, avec une répartition spectrale simulant celle du soleil ou étant celle du soleil. Les fibres textiles et les textiles selon l'invention sont particulièrement adaptés pour être utilisés dans des applications militaires et civiles, par exemple, mais non exclusivement, pour la fabrication de vêtements, de gants, de chaussures, de tentes, de bâches, d'abris, de cloisons, de tissus quelconques, de filtres, de mousses, de membranes, etc. Ces articles et accessoires textiles peuvent par exemple être utilisés à des fins civiles ou de recherche, dans des hôpitaux, des laboratoires, par des pompiers, ainsi que dans des applications domestiques, mais aussi à des fins militaires, etc. Les textiles, tissés ou non-tissés, selon l'invention peuvent ainsi être des textiles techniques, médicaux ou même d'ameublement.

L'invention sera mieux comprise et d'autres détails, caractéristiques et avantages de la présente invention apparaîtront plus clairement à lecture de la description qui suit faite à titre d'exemple non limitatif et en référence aux dessins annexés, dans lesquels :
- la figure 1 est une vue schématique en perspective d'une nanofibre de matériau semiconducteur selon la présente invention ;
- la figure 2 est une vue schématique en perspective d'un nanotube de matériau semiconducteur selon la présente invention ;
- la figure 3 est une vue schématique en perspective d'un nanocomposite selon la présente invention, comportant une nanofibre de matériau support recouverte de nanoparticules de matériau semiconducteur ou non-semiconducteur ;
- la figure 4 est une vue schématique en perspective d'un nanocomposite selon la présente invention, comportant un nanotube de matériau support recouvert et rempli de nanoparticules de matériau semiconducteur ou non-semiconducteur ;
- la figure 5 est une image de microscopie électronique en transmission (MET) d'une partie d'un nanotube de l'invention, en dioxyde de titane ou en titanate recouvert de nanoparticules de trioxyde de tungstène ;
- la figure 6 est une image MET d'une partie d'un nanotube de l'invention, en carbone recouvert et rempli de nanoparticules de dioxyde de titane;
- la figure 7 est une image MET d'une partie d'un nanotube de l'invention, en carbone rempli de nanoparticules de dioxyde de titane ;
- les figures 8a, 8b et 8c sont des images de microscopie électronique à balayage (MEB) d'une fibre textile recouverte par la technique de pulvérisation (« spraying ») de nanocomposites (nanotube/nanostructures) du type de celle représentée en figure 5 ;
- les figures 9a, 9b, 9c et 9d sont des images MEB d'une fibre textile recouverte par la technique de dépôt couche par couche (« Layer-by-layer ») de nanocomposites (nanotube/nanostructures) du type de celle représentée en figure 5 ;
- les figures 10a et 10b sont des images MEB de fibres textiles recouvertes par la technique d'immersion ou de « coating » de nanofibres de l'invention, en carbone recouvertes de nanoparticules de dioxyde de titane, la figure 10b étant une vue agrandie représentant le réseau de nanofibres de carbone portant des nanoparticules de TiO₂ ;
- la figure 11 est un graphe représentant l'évolution du taux restant d'un agent simulant (DMMP) déposé sous forme de gouttelettes sur deux textiles, un premier textile comprenant des fibres du type de celles représentées en figure 9a, 9b, 9c et 9d, et un second textile comprenant des fibres recouvertes de nanoparticules à morphologie granulaire de dioxyde de titane, en fonction du temps d'exposition de ces textiles à une illumination solaire artificielle ;
- la figure 12 est un graphe représentant l'évolution du taux d'abattement d'un agent simulant (DES) circulant en phase gazeuse à faible débit en contact léchant avec un textile comprenant des fibres du type de celle représentée en figures 8a, 8b et 8c, en fonction du temps d'exposition de ce textile à une illumination solaire artificielle ;
- la figure 13 est un graphe représentant l'évolution du taux d'inactivation de spores *Bacillus subfilis* déposées sur un textile comportant des fibres du type de celle représentée en figures 8a, 8b et 8c ou 9a, 9b, 9c et 9d, en fonction du temps d'exposition de ce textile à une illumination solaire artificielle ; et
- la figure 14 est un graphe représentant l'évolution de l'absorption lumineuse de matériaux semiconducteurs de différentes structures en fonction de la longueur d'onde d'un rayonnement lumineux incident.

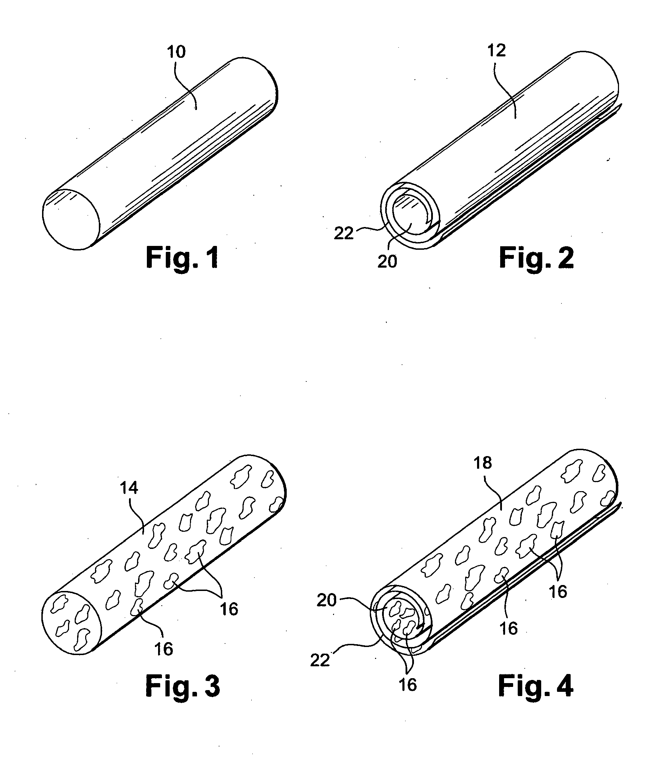

On se réfère d'abord aux figures 1 à 4 qui représentent de manière très schématique, respectivement, une nanofibre 10 de matériau semiconducteur par exemple, un nanotube 12 de matériau semiconducteur par exemple, un nanocomposite formé d'une nanofibre 14 de matériau support par exemple recouvert de nanoparticules 16 de matériau semiconducteur ou non-semiconducteur par exemple, et un nanocomposite formé d'un nanotube 18 de matériau support par exemple recouvert et rempli de nanoparticules 16 de matériau semiconducteur ou non-semiconducteur par exemple.

On entend par nanotube ou nanofibre, une structure géométrique de taille nanométrique (nanostructure) ayant une morphologie unidimensionnelle comme décrit ci-dessus, cette nanostructure pouvant être réalisée dans un matériau semiconducteur ou dans un matériau support. On entend par nanocomposite une nanostructure du type précité (semiconducteur ou non) associée ou combinée en plus à des nanoparticules d'un matériau semiconducteur ou non-semiconducteur. Le matériau support peut être un matériau semiconducteur ou un matériau non semiconducteur.

La présente invention concerne un textile dont les fibres sont recouvertes au moins en partie par ce type de nanofibres 10, 14 ou nanotubes 12, 18 (ou par ce type de nanostructures 10, 12 ou nanocomposites 14, 16 et 16, 18), le matériau semiconducteur sous forme de nanofibres 10, de nanotubes 12, et/ou de nanoparticules 16 ayant des propriétés photocatalytiques de dégradation de composés organiques, comme cela sera décrit plus en détail dans ce qui suit. Les fibres du textile peuvent être recouvertes d'un ou plusieurs types de nanofibres, de nanotubes, et/ou de nanocomposites.

Les nanofibres 10, 14 sont pleines et ont une section de forme sensiblement circulaire. Ces sections peuvent toutefois avoir une forme carrée, rectangulaire, ovale, ou autre.

Chaque nanotube 12, 18 est formée par l'enroulement sur lui-même d'un plan ou feuillet 22 de faible épaisseur, autour de l'axe longitudinal du nanotube. Chaque nanotube 12, 18 peut également être formé par l'enroulement sur eux-mêmes de plusieurs plans ou feuillets superposés, autour de l'axe longitudinal du nanotube.

Chaque nanotube 12, 18 comporte une cavité cylindrique interne 22 longitudinale à l'intérieur de laquelle peut se loger et se fixer des nanoparticules 16 de matériau semiconducteur ou non-semiconducteur. Les nanofibres 10, 14 ou nanotubes 12, 18 ont une longueur comprise entre 0,1µm et 5mm environ, et de préférence entre 500nm et 500µm environ. Le diamètre externe des nanotubes et des nanofibres est compris entre 5 et 150 nanomètres environ, et de préférence entre 15 et 20 nanomètres environ.

Les nanoparticules 16 de matériau semiconducteur ont un diamètre moyen compris entre 3 et 200nm, et de préférence entre 5 et 20nm environ. Le ou chaque feuillet 22 d'un nanotube 12, 18 a une épaisseur de l'ordre de 1 à 5nm, et de préférence 2 à 3nm. L'épaisseur dépend notamment du matériau.

Le matériau support sous forme de nanofibres 14 ou nanotubes 18 peut être un matériau semiconducteur ou un matériau non-semiconducteur, ces nanofibres ou nanotubes étant recouverts et/ou remplis d'un matériau semiconducteur ou non-semiconducteur sous forme de nanoparticules 16 qui peut être identique ou différent du matériau semiconducteur formant les nanostructures unidimensionnelles.

La combinaison d'un premier matériau semiconducteur sous forme d'une nanofibre ou d'un nanotube à un second matériau semiconducteur sous forme de nanoparticules permet d'élargir ou de déplacer la gamme de longueur d'onde d'absorption de la lumière du nanocomposite (formé par l'association nanofibre/nanoparticules ou nanotube/nanoparticules) par laquelle la photocatalyse est activée et a lieu.

La combinaison d'un matériau semiconducteur sous forme d'une nanostructure à morphologie unidimensionnelle à un matériau non semiconducteur sous forme de nanoparticules permet de conférer de nouvelles propriétés aux nanocomposites ainsi formés, ou d'améliorer certaines propriétés de ces nanocomposites. A titre d'exemple, les nanostructures peuvent être combinées à des nanoparticules métalliques, telles que en particulier des nanoparticules de Au, Ag, Cu, Pd, Pt, pour augmenter par exemple les propriétés biocides des nanocomposites. Ces nanoparticules métalliques peuvent être sous forme ionique ou non-ionique.

La combinaison d'un matériau support non-semiconducteur avec des nanoparticules de matériau semiconducteur permet de combiner les propriétés et les avantages de chacun de ces matériaux. Par exemple, la surface spécifique importante et les propriétés de délocalisation spatiale des charges de nanofibres de carbone peuvent être combinées aux propriétés photocatalytiques de nanoparticules de dioxyde de titane dans des nanocomposites nanofibre de carbone / nanoparticules de TiO₂.

Le matériau semiconducteur sous forme de nanotubes, de nanofibres ou de nanoparticules permet, grâce à sa structure électronique à bande interdite, de générer des porteurs de charge lorsqu'il est exposé à un rayonnement lumineux ayant une longueur d'onde donnée. Ces porteurs de charge sont destinés à réagir avec les composés organiques en surface du textile pour les dégrader par réaction de photocatalyse. Cependant, ces réactions ne sont possibles, de manière efficace, que si la durée de vie des porteurs de charge est suffisamment longue, c'est-à-dire que les porteurs de charge ne se recombinent pas immédiatement après avoir été créés.

La morphologie unidimensionnelle des nanofibres ou nanotubes de matériau semiconducteur ou non-semiconducteur selon l'invention permet de délocaliser spatialement les charges sur toute la longueur des nanofibres ou nanotubes et donc d'augmenter sensiblement cette durée de vie. Les nanostructures (nanotubes et nanofibres) et nanocomposites selon l'invention sont donc particulièrement adaptés pour dégrader par photocatalyse des composés organiques résistants tels que des armes chimiques neurotoxiques par exemple à base d'organophosphates (VX, Sarin, Soman, etc.) ou des agents vésicants par exemple à base de sulfures d'alkyles (Ypérite, gaz moutarde, etc).

A titre d'exemple, le matériau semiconducteur sous forme de nanofibres 10, de nanotubes 12, ou de nanoparticules 16 est du dioxyde de titane (TiO₂) ou de titanate, du trioxyde de tungstène (WO₃), de l'oxyde de zinc (ZnO), du sulfure de cadmium (CdS), du carbure de silicium (SiC), ou tout autre matériau semiconducteur (ou mélange de matériaux semiconducteurs) qui est activable en particulier dans le domaine de l'ultraviolet et/ou du visible.

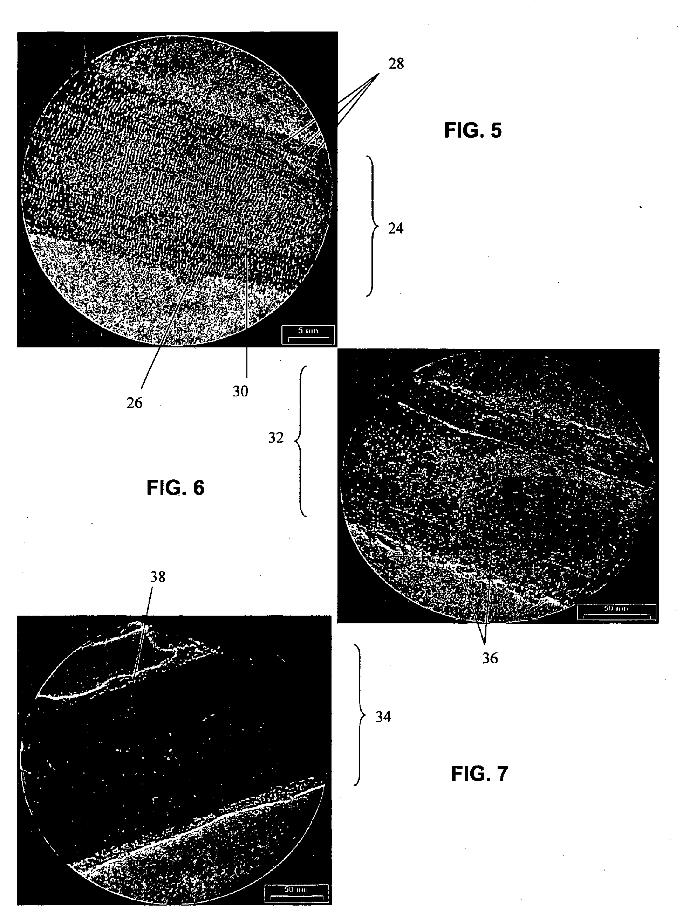

La figure 5 est une image de microscopie électronique en transmission (MET) d'une partie d'un nanotube 24 de dioxyde de titane ou de titanate sur la surface cylindrique externe duquel sont déposées des nanoparticules 26 de WO₃. Le nanotube 22 comprend un ou plusieurs feuillets 28 enroulés sur eux-mêmes qui définissent une cavité cylindrique interne 30. Ce nanotube 24 a une longueur de 1µm environ, et un diamètre de 15-20nm environ. La surface spécifique du dioxyde de titane ou de titanate sous forme de nanotube est de 300 à 400m²/g environ, et celle des nanoparticules de WO₃ est de 40m²/g environ. Ces nanoparticules 26 ont un diamètre moyen de 3-5nm environ. Ce nanocomposite (nanotube de TiO₂/nanoparticules de WO₃) génère des porteurs de charge à une longueur d'onde d'irradiation allant jusqu'à 450nm environ (et partant par exemple depuis le domaine de l'UV), correspondant au domaine du début du visible.

Les figures 6 et 7 sont des images MET de nanotubes 32, 34 de carbone qui sont respectivement recouvert et rempli de nanoparticules 36 de TiO₂ et rempli de nanoparticules 38 de TiO₂. Les nanotubes 32, 34 ont une longueur de 1µm environ, et un diamètre de 150nm environ.

Ces nanotubes sont également formés d'un ou de plusieurs feuillets et comportent chacun une cavité interne longitudinale, les cavités internes des nanotubes 32, 34 comportant des nanoparticules 38 de TiO₂. Les nanoparticules 36 présentes à la surface du nanotube 32 ont un diamètre moyen de l'ordre de 5 à 10nm, et celles 36 contenues dans les nanotubes 32, 34 ont un diamètre variant de quelques nanomètres à 50nm environ. La surface spécifique du dioxyde de titane ou de titanate sous forme de nanoparticules 36, 38 est de 50m²/g environ. Les nanocomposites 36 génèrent des porteurs de charge à une longueur d'onde d'irradiation allant jusqu'à 420-450nm environ, c'est à dire dans le début du visible.

### Exemple 1 : Préparation de nanotubes de dioxyde de titane ou de titanate.

La synthèse de nanotubes de dioxyde de titane (TiO₂) ou de titanate a été réalisée par traitement hydrothermal à 130°C d'une poudre de dioxyde de titane (TiO₂) dans une solution basique d'hydroxyde de sodium (NaOH) concentrée (à 10M). 1g de TiO₂ pulvérulent (Degussa P-25) a été ajouté à 50mL d'une solution de NaOH (10M) dans un autoclave en téflon. L'ensemble a été agité pendant une heure puis laissé à 130°C pendant 488 heures. Cette étape a conduit à l'obtention de nano-feuillets de titanate de sodium. La poudre blanche obtenue a ensuite été filtrée sous vide et lavée avec de l'acide chlorhydrique (HCl - à 2M) jusqu'à l'obtention de la neutralité, rincée à l'eau distillée, puis séchée toute la nuit à 110°C. Un traitement de calcination post-synthèse a été effectué à 380°C. Au cours de l'étape de rinçage, on est passé progressivement d'une structure sous forme de feuillets de titanate de sodium à une nanostructure « enroulée » à morphologie unidimensionnelle (du type nanotube de dioxyde de titane ou de titanate) intégrant de l'hydrogène, les protons H⁺ ayant remplacés progressivement les ions sodium Na⁺ au cours du rinçage. Le matériau semiconducteur ainsi synthétisé a présenté une surface spécifique de l'ordre de 300 à 400m²/g environ.

### Exemple 2 : Préparation de nanocomposites comportant des nanotubes de dioxyde de titane ou de titanate portant et/ou renfermant des nanoparticules de trioxyde de tungstène (WO₃).

Les nanotubes obtenus à l'issue du procédé de préparation de l'exemple 1 ont été imprégnés avec une solution éthanol/eau déionisée (dans un rapport 1 pour 2 - 1/2) contenant un sel de tungstène, (NH₄)₁₀W₁₂O₄₁, 5H₂O. Après agitation pendant 1 heure, le mélange a été soumis à sonication pendant 1 heure, suivi d'une évaporation à température ambiante pendant 24 heures sous agitation. La poudre ainsi obtenue a ensuite été séchée à 110°C pendant une nuit, puis calcinée à 380°C pendant 2 heures.

On a alors obtenu des nanocomposites (nanotube de TiO₂/nanoparticules de WO₃) tels que représentés en figure 5. Ces nanocomposites ont des diamètres de l'ordre de 15-20nm environ.

### Exemple 3 : Préparation d'un textile dont les fibres sont recouvertes de nanocomposites nanotube de TiO₂/nanoparticules de WO₃ par la technique de pulvérisation (ou « spraying »).

Les nanocomposites préparés par le procédé de l'exemple 2 ont été mis en suspension dans une solution eau/éthanol (50/50) à une concentration de 10g/l. La solution a ensuite été pulvérisée une première fois sur des fibres en coton d'un textile de façon à bien imprégner ces fibres. Le textile a alors été mis à l'étuve et séché à 110°C pendant 30 minutes. De la solution a à nouveau été pulvérisée une seconde et une troisième fois sur le textile, chaque étape de pulvérisation ayant été suivie d'une étape de séchage du textile à l'étuve à 110°C, et pendant 30 minutes.

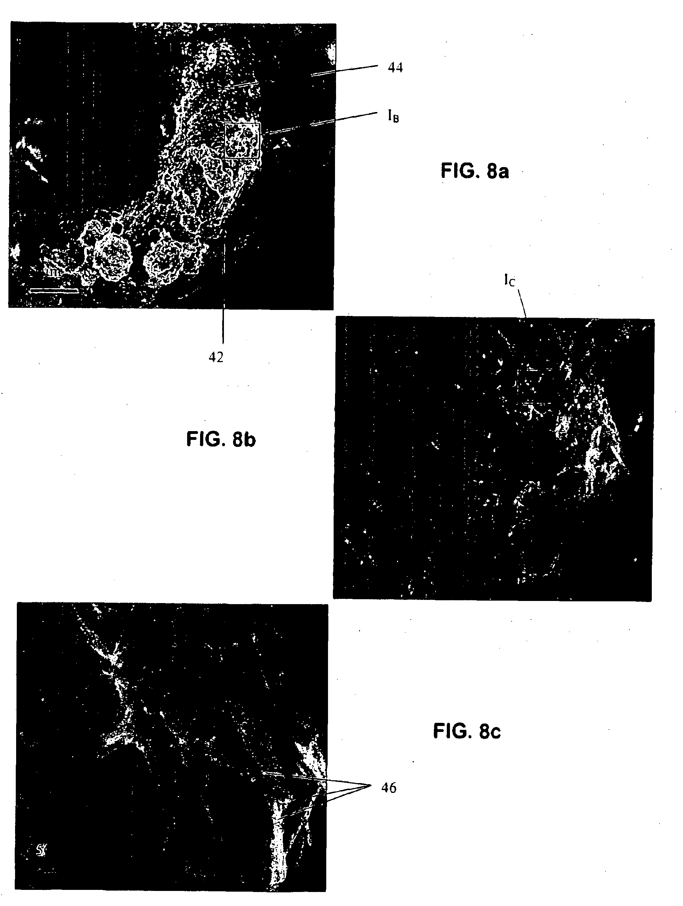

Les figures 8a, 8b et 8c sont des images de microscopie électronique à balayage (MEB) des fibres du textile ainsi préparées, à trois échelles différentes respectivement. La figure 8b est une image agrandie du détail I_{B} de la figure 8a et la figure 8c est une image agrandie du détail I_{C} de la figure 8b.

Les fibres 42 du textile visibles en figure 8a ont un diamètre de l'ordre de 9-12µm. Ces fibres 42 sont recouvertes d'un tapis 44 de nanocomposites 46 nanotube de TiO₂/nanoparticules de WO₃ qui sont enchevêtrés les uns dans les autres.

### Exemple 4 : Préparation de nanocomposites comportant des nanotubes de carbone portant et/ou renfermant des nanoparticules de dioxyde de titane ou de titanate.

Les nanotubes de carbone utilisés sont commercialisés sous la dénomination « PYROGRAF III CARBON FIBER, Grade P.R.-24-P5 (0343) » par la société Pyrograf Products, Inc. à Cerdaville, (Ohio, USA).

Une quantité donnée de ces nanotubes de carbone pulvérulents (test 1 = 0,2g et test 2=0,4 g) a été dispersée dans une solution d'éthanol (20 mL) pendant 1 heure, suivi par l'ajout, sous agitation lente, d'isopropoxyde de titane (7 mL), précurseur de la synthèse par voie sol-gel. Le sol obtenu par la suite après l'ajout d'acide chlorhydrique à 2M (12 mL), sous agitation vive, a été mûri sous agitation pendant 72 heures. Pour finir, la solution laiteuse ainsi obtenue a été séchée à température ambiante pendant 24 heures, puis à 110°C pendant 1 heure, avant d'être calcinée à 350°C pendant 3 heures.

On a ainsi obtenu des nanocomposites tels que ceux représentés aux figures 6 et 7.

Dans le cas du test 1, où la quantité de nanotubes de carbone dispersés dans la solution d'éthanol était proportionnellement plus faible (0,2g), on a déposé les nanoparticules 36 de façon non-sélective aussi bien à l'intérieur qu'à l'extérieur des nanotubes de carbone (nanocomposites de la figure 6). Dans le cas du test 2, où la quantité précitée était plus importante (0,4g), on a obtenu un dépôt sélectif des nanoparticules 38 exclusivement à l'intérieur des nanotubes de carbone (nanocomposites de la figure 7).

### Exemple 5 : Préparation d'un textile selon l'invention dont les fibres sont recouvertes de nanocomposites nanotube de titanate/nanoparticules de WO₃ par la technique de dépôt couche par couche (ou « Layer-by-layer »).

On a préparé un polycation contenant du polyéthylèneimine PEI⁺ (M_{w} = 800) à 8g/L, et un polyanion contenant une solution colloïdale de nanocomposites nanotube de carbone/nanoparticules de TiO₂ préparés par le procédé de l'exemple 2, et ajustée à pH 9 avec NaOH (à 10M).

Le textile a été préalablement rincé à l'eau distillée, dégraissé à l'acétone et à l'éthanol, puis séché 5min à 100°C. Ce textile a ensuite été introduit dans la solution du polycation PEI⁺ pendant 20min sous agitation orbitale, rincé abondamment à l'eau distillée, mis 20min dans une solution colloïdale contenant les nanocomposites à 10g/L, puis rincé abondamment. Ces étapes ont été répétées autant de fois que nécessaire. Le matériau final a été séché 5min à 100°C.

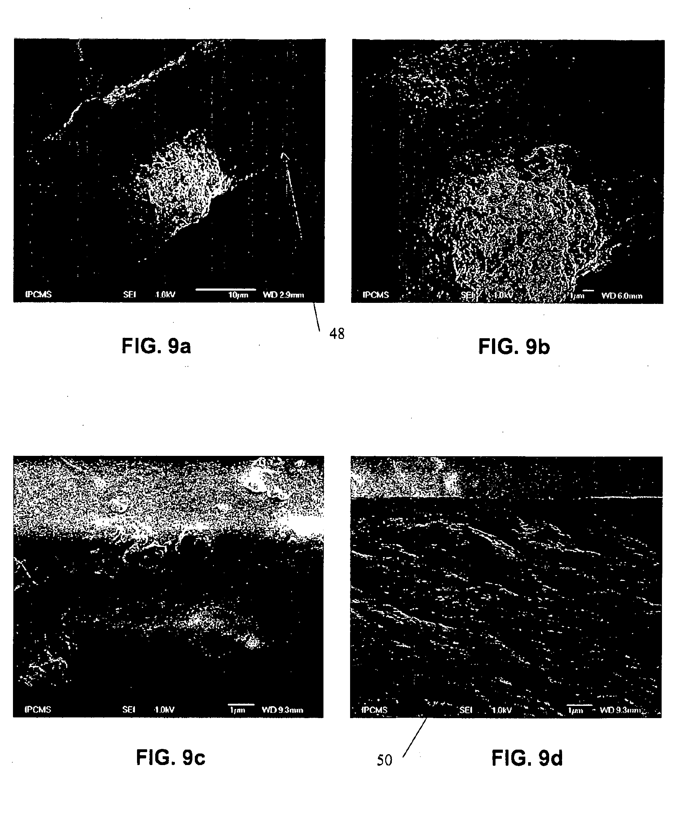

Les figures 9a, 9b, 9c et 9d sont des images MEB des fibres d'un textile préparé par la technique Layer-by-layer, à quatre échelles différentes respectivement. Les fibres 48 sont réalisées en coton et ont un diamètre de 20-25µm environ. Elles sont recouvertes d'un tapis 50 ou d'un film homogène, formé de couches successives de nanocomposites nanotube de titanate/nanoparticules de WO₃.

### Exemple 6 : Préparation d'un textile dont les fibres sont recouvertes de nanocomposites nanofibre de carbone/nanoparticules de dioxyde de titane par la technique de trempage ou d'immersion (ou « coating »).

Dans cet exemple, les fibres textiles macroscopiques sont recouvertes d'un réseau de nanofibres (ou nanotubes) de carbone servant de structures nanométriques unidimensionnelles, ces nanostructures étant recouvertes de nanoparticules de TiO₂. Ici, la structure fibreuse macroscopique est imprégnée par trempage avec un sel de nickel Ni(NO₃)₂, 6H₂O (Merck®) dans une solution éthanolique (0,9mL d'éthanol à 0,19mol/L de nickel pour 0,5g de fibres) pour réaliser la croissance directe des nanofibres de carbone qui serviront de support nanométrique au TiO₂. L'évaporation du solvant a ensuite été réalisée une nuit à température ambiante, suivie par un séchage à 110°C pendant 10 heures. Après réduction à 250°C sous hydrogène pendant 2 heures pour obtenir des particules de nickel métalliques, la synthèse des nanofibres de carbone a été obtenue par CCVD (Chemical Catalytic Vapor Deposition) dans un mélange éthanol/hydrogène (rapport molaire de 1:5 pour un débit total de 120mL/min) à 700°C pendant 1 heure, utilisant 0,5g du substrat Ni/microfibres textiles.

Les fibres textiles recouvertes de nanocomposites ont été séchées sous flux d'air (à 500mL/min) pendant 2 minutes, séchées à température ambiante pendant 24 heures, puis séchées à 100°C pendant 30 minutes.

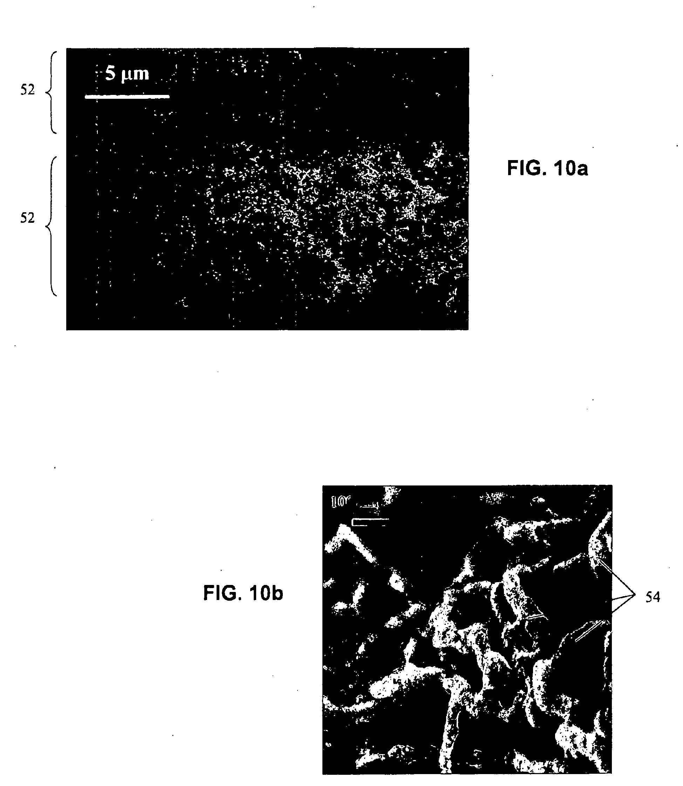

Les figures 10a et 10b sont des images MEB de fibres d'un textile préparé par la technique précitée, à deux échelles différentes respectivement. Les fibres textiles 52 ont un diamètre de 9-10µm environ et sont recouvertes de façon homogène par les nanocomposites 54.

Exemple 9 : Utilisation de textiles selon l'invention pour la destruction d'un agent chimique sous forme de gouttelettes en contact statique avec le textile.

Les fibres d'un premier textile ont été recouvertes d'un revêtement de nanocomposites à morphologie unidimensionnelle préparés à l'exemple 2 (nanotube de TiO₂ / nanoparticules de WO₃). Les fibres d'un second textile ont été recouvertes d'un revêtement de nanoparticules à morphologie granulaire de matériau semiconducteur.

Des agents chimiques de guerre (VX, HD) et des agents simulants (DMMP : diméthylméthylphosphonate, et DES : diéthylsulfure) ont été déposés sous forme de gouttelettes sur des échantillons de 4 cm² du premier et du second textile, à raison de 10g/m² (normes OTAN). Ces échantillons ont ensuite été exposés à une illumination solaire artificielle d'une puissance électrique de 24W, la lampe ayant été située en position horizontale à 7cm au dessus des échantillons.

L'ensemble des tests a été mené à température ambiante à un taux d'humidité relative variant d'environ 20 à environ 50% sans influencer les performances. Des nanocomposites (nanotube de TiO₂ / nanoparticules de WO₃) préparés à l'exemple 2 ont été déposés par le procédé de l'exemple 5 (méthode de dépôt Layer-by-layer) sur le premier textile dont les fibres sont du type 50% polyamide/50% coton. Les fibres du second textile sont identiques à celles du premier textile et sont recouvertes de nanoparticules de dioxyde de titane (P25 Degussa®) déposées par le procédé de pulvérisation de l'exemple 3.

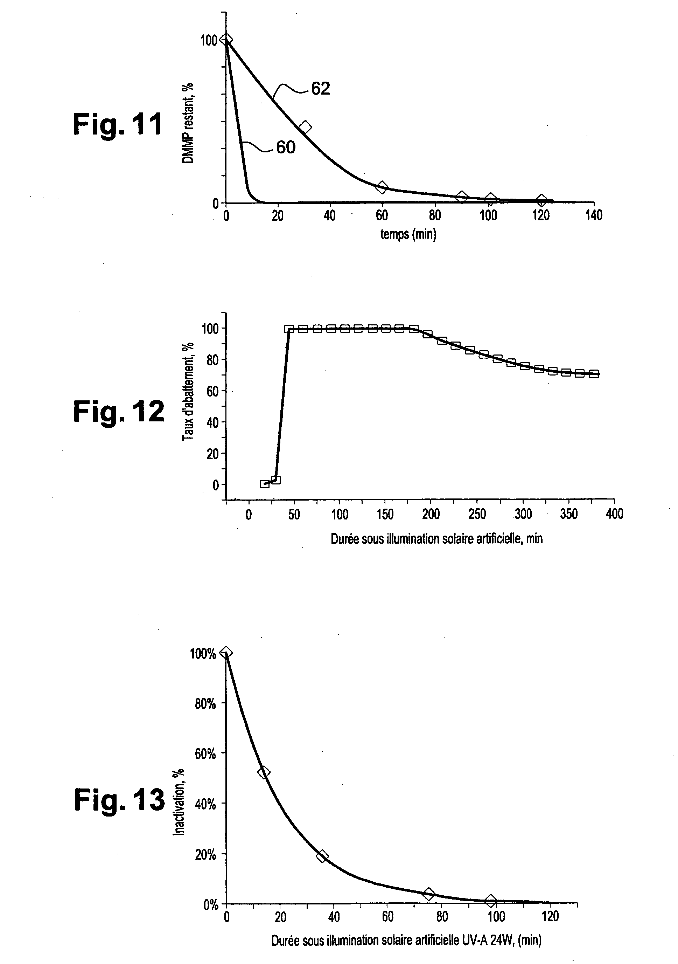

La figure 11 est un graphe illustrant la cinétique de dégradation du DMMP au cours du temps sous illumination solaire artificielle. Ce graphe représente plus précisément l'évolution du taux restant de DMMP en surface de chaque textile en fonction du temps d'exposition de ces textiles au rayonnement lumineux. Ce graphe met en évidence une élimination totale de l'agent chimique en surface du premier textile au bout de 8 minutes d'exposition (courbe 60), contre 100 minutes pour le second textile (courbe 2). Des résultats quasi-identiques ont été obtenus avec un premier textile préparé par le procédé de l'exemple 3 (méthode de pulvérisation ou « spraying »). Cette figure montre donc clairement la grande efficacité des matériaux semiconducteurs à morphologie unidimensionnelle par rapport à ceux à morphologie granulaire, pour la dégradation photocatalytique de composés organiques tels que des agents chimiques.

### Exemple 10 : Utilisation d'un textile selon l'invention pour la destruction d'un agent chimique sous forme gazeuse en contact ponctuel sous flux léchant avec le textile.

La dégradation des agents chimiques de guerre (VX, HD) et des agents simulants (DMMP et DES) en phase gazeuse a été mise en oeuvre en faisant passer un flux d'air à 50cm³/min à travers un saturateur contenant l'agent chimique liquide. Le flux gazeux contaminé avec du DES (simulant de l'Ypérite) à 350ppm a été mis en contact en flux léchant avec le textile dont les fibres ont été préalablement recouvertes d'un dépôt de nanostructures ou nanocomposites, ce tissu ayant été enroulé sur la paroi interne d'un réacteur cylindrique. Une lampe de puissance électrique de 24W, simulant une illumination solaire, a été glissée à l'intérieur du tube cylindrique permettant ainsi une illumination homogène du tissu enroulé sur le réacteur.

L'ensemble des tests a été mené à température ambiante à un taux d'humidité relative variant de 20 à 50% avec des nanotubes de dioxyde de titane ou de titanate déposés sur des fibres textiles 50% polyamide/50% coton, soit par la méthode Layer-by-layer selon l'invention soit par pulvérisation, sous illumination solaire artificielle.

La figure 12 est un graphe illustrant la cinétique de dégradation du DES, et représente plus précisément l'évolution du taux d'abattement du DES en fonction du temps d'exposition du textile au rayonnement lumineux. Le graphe montre une élimination totale du contaminant pendant 150 minutes, suivie d'une stabilisation à un taux d'abattement à 70%.

### Exemple 11 : Utilisation d'un textile selon l'invention pour la destruction d'agents biologiques.

Les propriétés biocides (bactéricides, virucides, fongicides, sporicides, etc.) des nanotubes de dioxyde de titane ou de titanate déposés sur des fibres textiles (coton) ont été mises en évidence. Un exemple d'inactivation de spores, *Bacillus subtilis* (simulant de l'Anthrax), est reporté sur la Figure 13. Cet exemple a été mené sur des échantillons de textiles de 4cm², revêtus d'un dépôt de nanotubes du type précité. Un prélèvement de 1ml d'un aliquot contenant les bacilles à raison de 10⁹ spores/mL a été déposé avec une micropipette sur le textile possédant le revêtement de nanofibres, exposé à une illumination UV-A (24 W) artificielle. La lampe UV-A a été disposée de façon horizontale à 7cm au dessus de l'échantillon de tissu. Le nombre de spores encore vivantes a été déterminé, en fonction de la durée d'exposition au rayonnement UV-A, par mise en culture sur plaques et comptage des colonies formées. Au bout de 100 minutes d'exposition au rayonnement UV-A, on a obtenu un abattement supérieur à 99.999 % (Figure 13).

### Exemple 12 : Synthèse in situ de nanotubes ou de nanofibres de matériau semiconducteur ou de nanocomposites comportant des nanofibres ou des nanotubes de matériau support portant des nanoparticules de matériau semiconducteur, sur un textile.

Il est possible de synthétiser directement les nanofibres, nanotubes ou nanocomposites sur un textile, soit en effectuant l'ensemble des étapes de la synthèse directement au contact du textile (voir les exemples 1, 2 et 4 ci-dessus), soit en effectuant au contact du textile une ou quelques unes des étapes du procédé de synthèse.

Dans le cas particulier de l'exemple 1, le textile peut être immergé dans la solution de départ pour la préparation des nanotubes de dioxyde de titane ou de titanate, ou peut être mis en contact avec la poudre blanche seulement lors de l'étape de lavage à l'acide chlorhydrique et de rinçage, de sorte que la structuration du matériau semiconducteur sous forme de nanotubes ait lieu directement sur le textile.

### Exemple 13 : Lavage et nettoyage d'un textile selon l'invention après décontamination et/ou dépollution par photocatalyse, en vue de la réutilisation de ce textile.

Après décontamination, le textile peut être recouvert d'un dépôt solide de sulphates ou de phosphates (issus de l'oxydation ultime des agents toxiques contenant du soufre ou du phosphore). Ces dépôts peuvent être éliminés par lavage à l'eau.

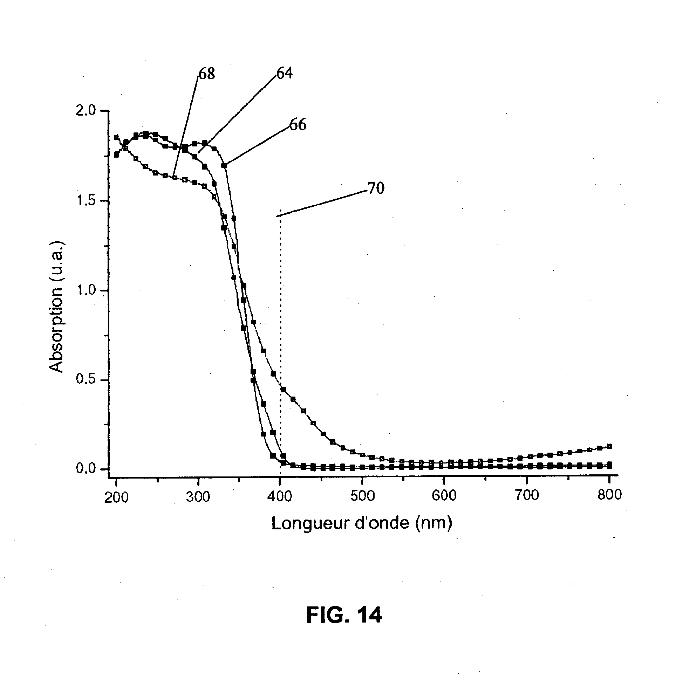

Exemple 14: Comme illustré par la figure 14, on a mesuré l'absorption lumineuse de matériaux semiconducteurs sous forme de différentes structures en fonction de la longueur d'onde d'un rayonnement lumineux incident. Trois matériaux semiconducteurs ont été testés, les résultats de ces tests étant représentés par les courbes 64, 66 et 68. Les courbes 64 et 66 représentent l'évolution de l'absorption lumineuse de nanoparticules de TiO₂, c'est-à-dire de TiO₂ sous forme granulaire. La courbe 68 représente l'évolution de l'absorption lumineuse de nanotubes de titanate recouverts de WO₃ (par exemple ceux obtenus à l'exemple 3).

La ligne 70 en traits pointillés représente la frontière entre le domaine de l'ultraviolet qui est inférieur à 400nm et le domaine du visible qui est supérieur à 400nm.

On peut clairement remarquer que les nanoparticules de TiO₂ absorbent uniquement la lumière ultraviolette et n'absorbent pas ou peu de lumière dans le visible. Au contraire, les nanotubes de titanate recouverts de WO₃ selon l'invention absorbent dans le domaine non seulement de l'ultraviolet et mais aussi dans celui du visible.

## Revendications

1. Procédé de préparation de fibres textiles ou d'un textile, recouvert(es) au moins partiellement d'un matériau semiconducteur ayant des propriétés photocatalytiques de dégradation de composés organiques, en particulier d'agents chimiques ou biologiques, **caractérisé en ce qu'**il comprend les étapes consistant à synthétiser des nanotubes (12) ou des nanofibres (10) de matériau semiconducteur, des nanotubes (18) ou des nanofibres (14) de matériau support semiconducteur combiné(e)s à des nanoparticules (16) de matériau semiconducteur ou non-semiconducteur, et/ou des nanotubes (18) ou des nanofibres (14) de matériau support non-semiconducteur combiné(e)s à des nanoparticules (16) de matériau semiconducteur, puis à recouvrir par la technique Layer-by-layer les fibres de ces nanotubes (12, 18) ou de ces nanofibres (10, 14).

2. Procédé selon la revendication 1, **caractérisé en ce qu'**il consiste à imprégner les fibres d'une solution de polycation à une concentration donnée, à rincer les fibres avec un liquide de rinçage approprié, à imprégner les fibres d'une solution de polyanion contenant les nanotubes (12, 18) ou les nanofibres (10, 14) à une concentration donnée, à rincer les fibres avec un liquide de rinçage approprié, puis à sécher les fibres, ou à imprégner les fibres d'une solution de polyanion à une concentration donnée, à rincer les fibres avec un liquide de rinçage approprié, à imprégner les fibres d'une solution de polycation contenant les nanotubes (12, 18) ou les nanofibres (10, 14) à une concentration donnée, à rincer les fibres avec un liquide de rinçage approprié, puis à sécher les fibres, les étapes d'imprégnation et de rinçage étant éventuellement répétées une ou plusieurs fois de façon à recouvrir les fibres d'un film multicouches composé d'une alternance de couches chargées positivement et de couches chargées négativement.

3. Fibres textiles obtenues par le procédé selon la revendication 1 ou 2, **caractérisées en ce que** le matériau semiconducteur est sous forme de nanostructures (10, 12) de morphologie unidimensionnelle dudit matériau semiconducteur, et/ou de nanoparticules (16) dudit matériau semiconducteur fixées à des nanostructures (14, 18) de morphologie unidimensionnelle d'un matériau support.

4. Fibres textiles selon la revendication 3, **caractérisées en ce qu'**elles sont recouvertes par des nanotubes (32, 34) et/ou des nanofibres de matériau non-semiconducteur, ces nanotubes ou nanofibres étant recouvert(e)s et/ou remplis au moins en partie par des nanoparticules (36, 38) d'un matériau semiconducteur, le matériau non-semiconducteur étant de préférence du carbone.

5. Fibres textiles selon la revendication 3 ou 4, **caractérisées en ce qu'**elles sont recouvertes par des nanotubes et/ou des nanofibres de matériau semiconducteur.

6. Fibres textiles selon l'une des revendications 3 à 5, **caractérisées en ce qu'**elles sont recouvertes par des nanotubes (24) et/ou des nanofibres de matériau semiconducteur, tel que par exemple de dioxyde titane ou de titanate, ces nanotubes ou nanofibres étant recouvert(e)s et/ou remplis au moins en partie par des nanoparticules (26) d'un matériau semiconducteur ou non semi-conducteur, tel que par exemple par des nanoparticules métalliques.

7. Fibres textiles selon l'une des revendications 3 à 6, **caractérisées en ce que** les nanoparticules (26) de matériau semiconducteur sont en TiO₂, WO₃, CdS, ZnO, ou SiC.

8. Fibres textiles selon l'une des revendications 4 à 7, **caractérisées en ce que** les nanotubes (12, 18) et/ou les nanofibres (10, 14) ont un diamètre compris entre 5 et 150nm environ, en particulier compris entre 15 et 20nm environ, et une longueur comprise entre 0,1µm et 5mm environ, et en particulier comprise entre 0,5µm et 2mm environ.

9. Textile du type tissé ou non tissé obtenu par le procédé selon la revendication 1 ou 2, **caractérisé en ce qu'**il comprend des fibres textiles selon l'une des revendications précédentes, le matériau semiconducteur étant de préférence présent à la surface du textile à raison de 0,01 et 100g/m².

10. Utilisation de fibres textiles ou d'un textile selon l'une des revendications 3 à 8 pour la dégradation photocatalytique de composés organiques, en particulier d'agents biologiques ou chimiques, la dégradation étant de préférence réalisée entre -10 et 100°C environ, et par exemple à température ambiante, et la dégradation étant éventuellement réalisée sous illumination naturelle ou artificielle, par exemple sous exposition à une lumière visible ou ultraviolette.

11. Utilisation selon la revendication 10, pour la dégradation d'agents chimiques neurotoxiques ou d'agents vésicants, ou pour la destruction d'agents biologiques, tels que des bactéries, des virus, des champignons, et des spores.

12. Utilisation de fibres textiles selon l'une des revendications 3 à 8, pour la fabrication d'un textile, par exemple un textile technique, un textile médical ou un textile d'ameublement.

## Patentansprüche

1. Verfahren zur Herstellung von Textilfasern oder einer Textilie, die wenigstens zum Teil mit einem halbleitenden Material beschichtet sind bzw. ist, mit photokatalytischen Eigenschaften beim Abbau organischer Verbindungen, insbesondere chemischer oder biologischer Stoffe,
**dadurch gekennzeichnet, dass** es Schritte umfasst zum synthetischen Herstellen von Nanoröhren (12) oder Nanofasern (10) aus halbleitendem Material, Nanoröhren (18) oder Nanofasern (14) aus halbleitendem Trägermaterial in Verbindung mit Nanopartikeln (16) aus halbleitendem oder nicht halbleitendem Material und/oder Nanoröhren (18) oder Nanofasern (14) aus nicht halbleitendem Trägermaterial in Verbindung mit Nanopartikeln (16) aus halbleitendem Material, anschließend zum Beschichten der Fasern der Nanoröhren (12, 18) oder der Nanofasern (10, 14) mit dem Layer-by-Layer-Verfahren.

2. Verfahren nach Anspruch 1,
**dadurch gekennzeichnet, dass** es darin besteht, die Fasern mit einer Polykationen-Lösung in einer gegebenen Konzentration zu imprägnieren, die Fasern mit einer geeigneten Spülflüssigkeit zu spülen, die Fasern mit einer die Nanoröhren (12, 18) oder die Nanofasern (10, 14) enthaltenden Polyanionen-Lösung in einer gegebenen Konzentration zu imprägnieren, die Fasern mit einer geeigneten Spülflüssigkeit zu spülen, anschließend die Fasern zu trocknen, oder die Fasern mit einer Polyanionen-Lösung in einer gegebenen Konzentration zu imprägnieren, die Fasern mit einer geeigneten Spülflüssigkeit zu spülen, die Fasern mit einer die Nanoröhren (12, 18) oder die Nanofasern (10, 14) enthaltende Polykationen-Lösung in einer gegebenen Konzentration zu imprägnieren, die Fasern mit einer geeigneten Spülflüssigkeit zu spülen, anschließend die Fasern zu trocknen, wobei die Schritte des Imprägnierens und des Spülens gegebenenfalls einmal oder mehrfach wiederholt werden, um die Fasern mit einem Mehrschichtenfilm zu überziehen, der sich abwechselnd aus positiv geladenen Schichten und negativ geladenen Schichten zusammensetzt.

3. Textilfasern erzielt durch das Verfahren nach Anspruch 1 oder Anspruch 2, **dadurch gekennzeichnet, dass** das halbleitende Material die Form von Nanostrukturen (10, 12) mit eindimensionaler Morphologie aus dem halbleitenden Material und/oder von Nanopartikeln (16) aus dem halbleitenden Material hat, die an Nanostrukturen (14, 18) mit eindimensionaler Morphologie aus einem Trägermaterial befestigt sind.

4. Textilfasern nach Anspruch 3,
**dadurch gekennzeichnet, dass** sie mit Nanoröhren (32, 34) und/oder Nanofasern aus nicht halbleitendem Material beschichtet sind, wobei die Nanoröhren oder Nanofasern wenigstens zum Teil mit Nanopartikeln (36, 38) aus einem halbleitenden Material beschichtet und/oder gefüllt sind, wobei das nicht halbleitende Material vorzugsweise Kohlenstoff ist.

5. Textilfasern nach Anspruch 3 oder 4,
**dadurch gekennzeichnet, dass** sie mit Nanoröhren und/oder Nanofasern aus halbleitendem Material beschichtet sind.

6. Textilfasern nach einem der Ansprüche 3 bis 5,
**dadurch gekennzeichnet, dass** sie mit Nanoröhren (24) und/oder Nanofasern aus halbleitendem Material beschichtet sind, zum Beispiel aus Titandioxid oder Titanat, wobei die Nanoröhren oder Nanofasern wenigstens zum Teil mit Nanopartikeln (26) aus einem halbleitenden oder nicht halbleitendem Material beschichtet und/oder gefüllt sind, zum Beispiel mit metallischen Nanopartikeln.

7. Textilfasern nach einem der Ansprüche 3 bis 6,
**dadurch gekennzeichnet, dass** die Nanopartikel (26) aus halbleitendem Material aus TiO₂, WO₃, CdS, ZnO oder SiC bestehen.

8. Textilfasern nach einem der Ansprüche 4 bis 7,
**dadurch gekennzeichnet, dass** die Nanoröhren (12, 18) und/oder die Nanofasern (10, 14) einen Durchmesser von ca. 5 bis 150 nm, insbesondere von ca. 15 bis 20 nm, und eine Länge von ca. 0,1 µm bis 5 mm, insbesondere von ca. 0,5 µm bis 2 mm haben.

9. Textilie des gewebten oder nicht gewebten Typs, erzielt durch das Verfahren nach Anspruch 1 oder 2,
**dadurch gekennzeichnet, dass** sie Textilfasern nach einem der vorhergehenden Ansprüche umfasst, wobei das halbleitende Material vorzugsweise auf der Oberfläche der Textilie in einer Menge von 0,01 bis 100 g/m² vorhanden ist.

10. Verwendung von Textilfasern oder einer Textilie nach einem der Ansprüche 3 bis 8 zum photokatalytischen Abbau organischer Verbindungen, insbesondere biologischer oder chemischer Stoffe, wobei der Abbau vorzugsweise bei ca. -10 °C bis 100 °C erfolgt, zum Beispiel bei Raumtemperatur, und wobei der Abbau gegebenenfalls bei natürlicher oder künstlicher Beleuchtung erfolgt, zum Beispiel durch Exposition gegenüber sichtbarem oder ultraviolettem Licht.

11. Verwendung nach Anspruch 10,
zum Abbau neurotoxischer chemischer Stoffe oder von Vesicantier oder zur Vernichtung biologischer Stoffe wie etwa Bakterien, Viren, Pilzen und Sporen.

12. Verwendung von Textilfasern nach einem der Ansprüche 3 bis 8,
zur Herstellung einer Textilie, zum Beispiel einer technischen Textilie, einer Medizintextilie oder einer Heimtextilie.

## Claims

1. A process for preparing textile fibers or a textile, which are at least partially covered with a semiconductive material with photocatalytic properties for degrading organic compounds, in particular chemical or biological agents, **characterized in that** it comprises the steps consisting in synthesizing nanotubes (12) or nanofibers (10) of semiconductive material, nanotubes (18) or nanofibers (14) of semiconductive support material combined with nanoparticles (16) of semiconductive or non-semiconductive material, and/or nanotubes (18) or nanofibers (14) of non-semiconductive support material combined with nanoparticles (16) of semiconductive material, and then in covering the fibers of these nanotubes (12, 18) or of these nanofibers (10, 14) via the layer-by-layer technique.

2. The process according to claim 1, **characterized in that** it consists in impregnating the fibers with a polycation solution at a given concentration, in rinsing the fibers with a suitable rinsing liquid, in impregnating the fibers with a polyanion solution containing the nanotubes (12, 18) or the nanofibers (10, 14) at a given concentration, in rinsing the fibers with a suitable rinsing liquid, and then in drying the fibers, or in impregnating the fibers with a polyanion solution at a given concentration, in rinsing the fibers with a suitable rinsing liquid, in impregnating the fibers with a polycation solution containing the nanotubes (12, 18) or the nanofibers (10, 14) at a given concentration, in rinsing the fibers with a suitable rinsing liquid, and then in drying the fibers, the impregnation and rinsing steps being optionally repeated one or more times so as to cover the fibers with a multilayer film composed of an alternation of positively charged layers and of negatively charged layers.

3. Textile fibers obtained through the process of claim 1 or claim 2, **characterized in that** the semiconductive material is under the form of nanostructures (10, 12) of one-dimensional morphology of said semiconductive material, and/or of nanoparticles (16) of said semiconductive material that are attached to nanostructures (14, 18) of one-dimensional morphology of a support material.

4. Textile fibers according to claim 3, **characterized in that** they are covered with nanotubes (32, 34) and/or nanofibers of non-semiconductive material, these nanotubes or nanofibers being covered and/or filled at least partially with nanoparticles (36, 38) of a semiconductive material, the non-semiconductive material being preferentially carbon.

5. Textile fibers according to claim 3 or 4, **characterized in that** they are covered with nanotubes and/or nanofibers of semiconductive material.

6. Textile fibers according to any one of claim 3 to 5, **characterized in that** they are covered with nanotubes (24) and/or nanofibers of semiconductive material, such as for example titanium dioxide or titanate, said nanotubes or nanofibers being covered and/or filled at least partially with nanoparticles (26) of a semiconductive or non-semiconductive material, such as for example metallic nanoparticles.

7. Textile fibers according to any one of claim 3 to 6, **characterized in that** the nanoparticles (26) of semiconductive material are made of TiO₂, WO₃, CdS, ZnO or SiC.

8. Textile fibers according to any one of claim 4 to 7, **characterized in that** the nanotubes (12, 18) and/or the nanofibers (10, 14) have a diameter of between 5 and 150 nm approximately, in particular between 15 and 20 nm approximately, and a length of between 0.1 µm and 5 mm approximately, in particular between 0.5 µm and 2 mm approximately.

9. Textile of the woven or nonwoven type obtained through the process of claim 1 or 2, **characterized in that** it comprises textile fibers as claimed in one of the preceding claims, the semiconductive material being preferentially present at the surface of the textile to a rate of from 0.01 to 100 g/m².

10. Use of textile fibers or of a textile as claimed in one of claims 3 to 8 for the photocatalytic degradation of organic compounds, in particular of biological or chemical agents, the degradation being optionally performed between -10 and 100°C approximately, for example at room temperature, and the degradation being optionally performed under natural or artificial illumination, for example by exposure to visible or ultraviolet light.

11. Use according to claim 10, for the degradation of neurotoxic chemical agents or vesicants, or for the destruction of biological agents, such as bacteria, viruses, fungi and spores.

12. Use of textile fibers according to any one of claims 3 to 8, for the manufacture of a textile, for example a technical textile, a medical textile or a furnishing textile.
